# EUROPÄISCHE PATENTSCHRIFT

(11) **EP 0 895 014 B1**
(45) Veröffentlichungstag und Bekanntmachung des Hinweises auf die Patenterteilung: **24.09.2003**
(21) Anmeldenummer: 98112630.3
(22) Anmeldetag: 08.07.1998
(51) Int. Cl.: F16L 19/10

(54) **Verfahren zur Markierung eines Werkstückes mit Vorrichtung zur Durchführung des Verfahrens**
Process for marking a workpiece with apparatus for conducting the process
Procédé pour le marquage d'une pièce et appareil pour la conduite du procédé

(30) Priorität: 30.07.1997 DE 19732757
(43) Veröffentlichungstag der Anmeldung: 03.02.1999
(73) Patentinhaber: Parker Hannifin GmbH, 33659 Bielefeld (DE)
(72) Erfinder: Hillmer, Karl-Heinz, 33659 Bielefeld (DE); Udhöfer, Andreas, 33334 Gütersloh (DE); Hunkenschroeder, Udo, 33689 Bielefeld (DE)
(74) Vertreter: Linser, Heinz, Physiker

(56) Entgegenhaltungen:
- GB-A- 2 220 716
- US-A- 3 471 181
- US-A- 4 962 579

## Beschreibung

Die Erfindung betrifft ein Verfahren zur Markierung eines Rohres bzw Rohrendes zwecks Kennzeichnung eines vorgeschriebenen und eingehaltenen Montageablaufs und Nachweis einer Montagekontrolle und damit Gütefunktion, wobei auf dem Rohrende mindestens ein Schneidring mit mindestens einer Schneide vormontiert wird, das mit dem Schneidring versehene Rohrende in ein mit einem konischen Teil und einem Anschlag versehenes Vormontagewerkzeug bis zu diesem Anschlag eingeführt wird, und auf den Schneidring eine axiale Kraft ausgeübt wird.

Die US 3 471 181 zeigt beispielsweise eine Schneidringverschraubung.

In der Praxis ist es üblich Schneidringverschraubungen in gehärteten Werkzeugen vorzumontieren. Hierzu werden hydraulische oder mechanische Geräte verwendet. Es ist auch möglich, die Vormontage im Schraubstock von Hand vorzunehmen. Der Vorteil der hydraulischen Montage liegt im geringeren Kraftaufwand während der Montage und in der Tatsache, daß die Montage nicht an unzugänglichen Stellen durchgeführt werden muß.

Bei der Verwendung von Edelstahlrohren ist die Vormontage in gehärteten Werkzeugen in der Regel vorgeschrieben, um einen ordnungsgemäßen Einschnitt des Schneidringes im Rohr und damit eine zuverlässige Rohrverschraubung zu gewährleisten.

Die DIN 3859 Teil 2 und dementsprechend auch die Montageanleitungen verschiedener Verschraubungshersteller schreiben vor, daß das Rohr, in das der Schneidring vormontiert werden soll, vor der Montage gegen den Rohranschlag im Stutzen des Montagewerkzeugs zu drücken ist. Diese Maßnahme ist erforderlich und notwendig, da zum Einschneiden des Ringes in das Rohr eine ausreichende Gegenkraft vorhanden sein muß. Wenn das Rohr während der Montage nicht am Rohranschlag des Stutzens anliegt, entsteht eine Fehlmontage. Das Rohr kann sich in diesem Fall mit dem Schneidring in axialer Richtung weiter bewegen. Durch den enger werdenden Konus des Stutzens des Montagewerkzeugs klemmt der Schneidring das Rohr ein, anstatt es einzuschneiden. Diese Klemmung reicht jedoch nicht aus, um die geforderte Druckfestigkeit und Dichtheit der Verbindung zu erzielen. Die Montageanleitungen für Schneidringverbindungen verlangen den Einschnitt des Schneidringes zu kontrollieren indem der Bundaufwurf vor dem Schneidring visuell begutachtet wird. Wenn der Schneidring ordnungsgemäß eingeschnitten hat, ist der Bundaufwurf größer, als wenn der Schneidring nur geklemmt hat. Da jedoch der Bundaufwurf absolut betrachtet relativ klein ist, ist die Beurteilung der vorschriftsmäßigen Größe des Bundaufwurfs nur subjektiv möglich und ist insbesondere in Grenzfällen, beispielsweise bei der Verwendung von harten Rohrwerkstoffen, die nur einen kleinen Bundaufwurf aufweisen, sehr schwierig. Eine fehlerhafte Montagekontrolle kann aber auch zu fehlerhaften Schraubverbindungen führen, welche unter allen Umständen vermieden werden müssen.

Aufgabe der vorliegenden Erfindung ist es daher, ein sicheres und objektives Indiz für das Vorliegen einer einwandfreien Vormontage vorzuschlagen, welches nicht von subjektiven Merkmalen beeinflußt wird und jederzeit nachprüfbar ist.

Die Lösung dieser Aufgabe besteht nach der Erfindung darin, daß bei dem eingangs aufgeführten Montageverfahren das Rohrende an den mit einer Signatur versehenen Anschlag des Vormontagewerkzeugs gepreßt wird, während der Schneidring durch die auf ihn ausgeübte Kraft in den Rohrmantel einschneidet, wodurch mittels der Preßkraft des Rohrendes gegen den Anschlag des Vormontagewerkzeugs die Stirnseite des Rohrendes gleichzeitig eine Prägung erhält.

Mit der vorliegenden Erfindung wird daher die Vorschrift ausgenutzt, während des Montagevorganges das Rohrende bis zum Anschlag des Vormontagewerkzeugs zu führen und einen ausreichenden Axialdruck auszuüben. Dieser für eine vorschriftsmäßige Vormontage notwendige Preßdruck wird in vorteilhafter Weise erfindungsgemäß gleichzeitig dafür verwendet, ein Signet auf die Stirnseite des Endes des Rohres zu pressen. Ein solches Signet stellt dann sicher, daß auch für das Einschneiden des oder der Schneidringe ein ausreichender Druck zu Verfügung stand, so daß zwischen der Güte der Vormontage und dem Vorhandensein eines Signets ein funktioneller und eindeutiger Zusammenhang gegeben ist.

Die Preßkraft für das Einschneiden des oder der Schneidringe in den Rohrmantel zur Durchführung der Vormontage ist nach der Erfindung derartig dimensioniert, daß noch eine ausreichende Preßkraft zwischen Rohrende und Anschlag für den Prägedruck auf das Rohrende zur Verfügung steht.

Zwischen der Preßkraft zwischen Rohrende und Anschlag für den Prägedruck und der Einschneidtiefe der Schneide des Schneidringes ist nach der Erfindung ein funktioneller Zusammenhang gegeben, derart, daß bei Vorhandensein des Prägedruckes in jedem Fall die erforderliche Einschneidtiefe der Schneidkanten der Schneidringe erreicht ist, so daß durch den Prägedruck auf der Stirnseite eines Rohres ein objektives Urteil über die Güte der Vormontage gegeben ist.

Der kreisringförmige Anschlag des Vormontagestutzens weist nach der Erfindung eine erhabene und/oder vertiefte Signatur zur Durchführung einer Druckprägung während des Vormontagevorganges auf die Stirnseite des Rohrendes zur Anzeige einer Vormontagekontrolle auf. Vorteilhaft wird aber auf der Ringfläche des Einschreibstutzens eine erhabene Struktur der Signatur verwendet, so daß ein vertiefter Abdruck auf der Frontseite des Rohrendes entsteht, so daß die Endfläche als metallische Dichtfläche nicht beeinflußt wird.

Die auf den Schneidring ausgeübte Kraft ist vorteilhaft so groß dimensioniert, daß gleichzeitig mit dem Einschneidvorgang des Schneidringes oder der Schneidringe ein Prägedruck auf die Frontseite des Rohrendes durchführbar ist.

In einer Abwandlung der Erfindung wird dem Anschlag des Montagewerkzeugs eine austauschbare Scheibe, eine Ringscheibe oder ein Zylinder vorgeordnet, welche auf ihrer dem Werkstück zugekehrten Stirnseite jeweils die definierte Signatur aufweist. Eines dieser austauschbaren Stücke wird vor der Vormontage dem Anschlag vorgesetzt. Entsprechend der Stärke dieser einsetzbaren Elemente ist der Anschlag verkürzt, so daß sich die gleichen geometrischen Verhältnisse ergeben.

Für den Aufbau der Signatur läßt sich in einer weiteren Ausführungsform der Erfindung ein hartes pulverförmiges oder granulatförmiges Material auf die Stirnseite des Anschlages oder die dem Werstück zugekehrte Stirnseite der Scheiben- oder Zylinderfläche in Form des aufzudruckenden Codes fest auftragen.

Die Erfindung wird anhand der Zeichnungen näher erläutert. Hierbei zeigen:
- Figur 1: eine Ansicht mit einem Längs-Teilschnitt eines mechanischen oder hydraulischen Vormontagewerkzeugs mit Werkstück zur Darstellung des Vormontagevorganges nach dem Stand der Technik;
- Figur 1a: eine vergrößerte Darstellung eines Ausschnittes aus Figur 1;
- Figur 2: eine vergrößerte Darstellung entsprechend der Figur 1a mit einer erhabenen Prägesignatur nach der Erfindung;
- Figur 3: eine vergrößerte Darstellung entsprechend der Figur 1a mit einer vertieften Prägesignatur nach der Erfindung;
- Figur 4: eine vergrößerte Darstellung entsprechend der Figur 1a mit einer erhabenen Prägesignatur nach der Erfindung in Form bestimmter Zeichen und
- Figur 5: eine stirnseitige Ansicht eines mit einer Prägesignatur versehenen Rohrendes.

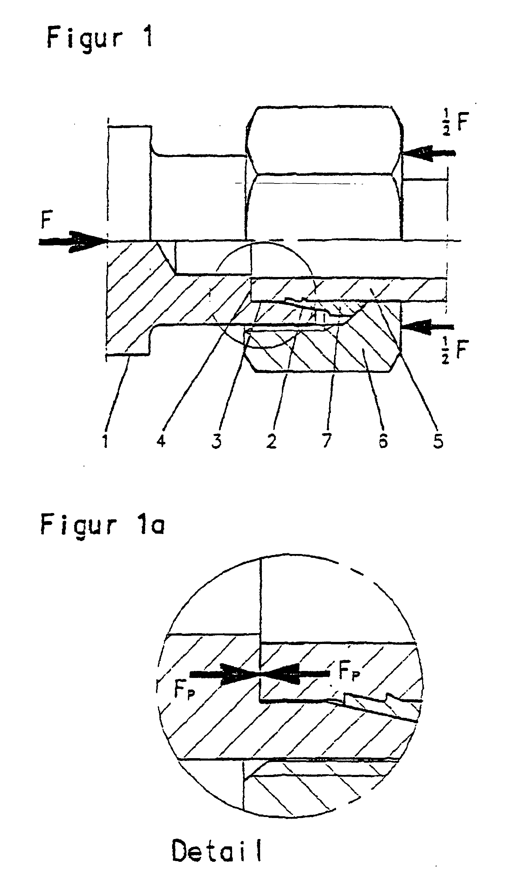

Die Figur 1 veranschaulicht die Kräfteverhältnisse während der Vormontage mit Hilfe eines mechanischen oder hydraulischen Vormontagegerätes. Das Vormontagegerät weist einen Stutzen 1 mit einem Konus 2 auf, der in einem zylinderischen Teil 3 zur Aufnahme des Rohrendes endet. Gegen die radial verlaufende Anschlagfläche 4 stößt während der Vormontage das Rohrende 5. Eine Überwurfmutter 6 übt auf den Schneidring 7 durch Anziehen eine Axialkraft aus, welche den Schneidring 7 mit seinen Schneidkanten in den Rohrmantel einschneiden läßt, da auf das Rohr über den Anschlag 4 eine Gegenkraft wirkt. Die aufzubringende Montagekraft ist mit "F" gekennzeichnet. Die Kraft, mit der das Rohrende 5 gegen den Rohranschlag 4 gedrückt wird, ist in Figur 1a mit Fp bezeichnet. Die erforderliche gleiche Gegenkraft, wirkt in die entgegengesetzte Richtung. Die Kraft Fp ist etwas geringer als die Montagekraft, da die Reibungsverluste zwischen Schneidring 7 und Montagekonus 2 abgezogen werden müssen. Die Kraft Fp ist jedoch auf jeden Fall ausreichend, um eine deutliche Markierung an der Stirnfläche des Rohrendes 5 aufzuprägen.

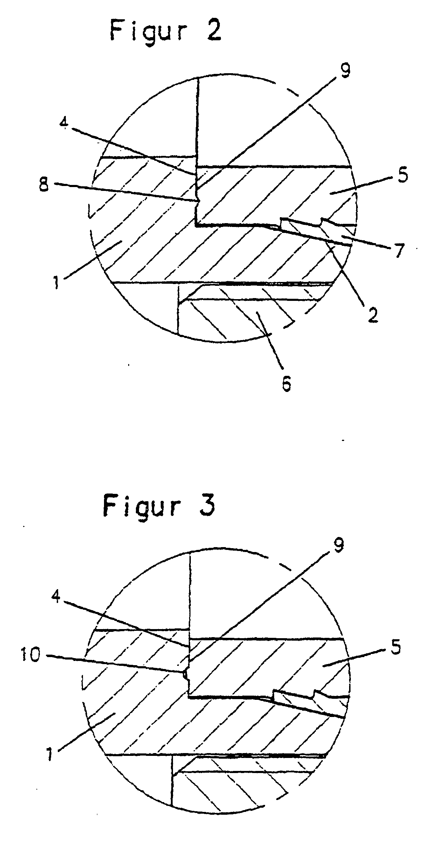

Hierzu wird auf Figur 2 verwiesen, welche einen gleichen Ausschnitt wiedergibt wie Figur 1a, wobei jedoch die radiale Anschlagfläche 4 mit einer Signatur 8 ausgerüstet ist, welche aus erhabenen Elementen besteht. Mit dem Einschneidvorgang des Schneidringes 7 in den Rohrmantel 5 preßen sich die Elemente 8 in die Stirnseite 9 des Rohrendes 5 ein. Der Einschneidvorgang des Schneidringes 7 bedingt daher gleichzeitig auch den Preßvorgang der Elemente 8 in die Stirnseite 9 des Rohrendes 5, womit sichergestellt ist, daß bei Vorhandensein eines Signets auf der Rohrstirnseite auch der vorschriftsmäßige Einschneidvorgang stattgefunden hat. Damit liegt eine obj ektive Montagekontrolle und ein Beweis für eine vorschriftsmäßige Vormontage vor, welche deutlich erkennbar ist.

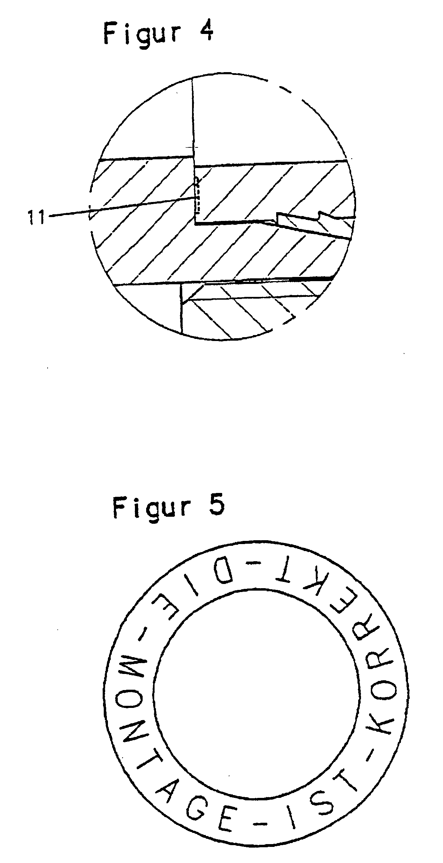

Die Figuren 3 und 4 zeigen weitere Ausführungsbeispiele bezüglich der Ausbildung der Prägezeichen. Die Signaturelemente 8 sind in Figur 2 erhaben ausgebildet, so daß sich auf der Stirnseite 9 des Rohrendes 5 vertiefte Prägungen ergeben.

In Figur 3 sind die Prägezeichen auf der Anschlagfläche 4 vertieft ausgebildet, so daß sich auf dem Rohrende 5 erhabene Elemente ergeben. Die Figur 4 gibt Prägeelemente 11 wieder, welche unterschiedliche Bild- oder Zeichenelemente aufweisen. Beispielsweise lassen sich spiegelverkehrte Schriftelemente ausbilden, so daß sich nach dem Prägevorgang ein lesbarer Schriftzug ergibt, welcher in Figur 5 dargestellt ist.

Die Erfindung läßt sich auch anwenden, um codifizierte Merkmale einzuprägen, beispielsweise Firmenkennzeichen, Angaben über Materialkennzeichen und Zeitangaben, beispielsweise der Herstellung, so daß sich damit eine lückenlose Qualitätskontrolle durchführen läßt, welche einen einfachen und sicheren Qualitätsnachweis ergibt.

### Bezugszeichenliste:

- 1: Stutzen
- 2: Konus
- 3: zylindrischer Teil des Stutzens
- 4: Anschlagfläche im Stutzen
- 5: Rohrende
- 6: Überwurfmutter
- 7: Schneidring
- 8: Elemente
- 9: Stirnseite des Rohres

## Patentansprüche

1. Verfahren zur Markierung eines Rohres bzw. Rohrendes (5) zwecks Kennzeichnung eines vorgeschriebenen und eingehaltenen Montageablaufs und Nachweis einer-Montagekontrolle und damit Gütefunktion, wobei auf dem Rohrende (5) mindestens ein Schneidring (7) mit mindestens einer Schneide vormontiert wird, das mit dem Schneidring (7) versehene Rohrende (5) in ein mit einem konischen Teil (2) und einem Anschlag (4) versehenes Vormontagewerkzeug bis zu diesem Anschlag (4) eingeführt wird, und auf den Schneidring (7) eine axiale Kraft ausgeübt wird, **dadurch gekennzeichnet, daß** das Rohrende (5) an den mit einer Signatur (8, 10, 11) versehenen Anschlag (4) des Vormontagewerkzeugs gepreßt wird, während der Schneidring (7) durch die auf ihn ausgeübte Kraft in den Rohrmantel einschneidet, wodurch mittels der Preßkraft des Rohrendes (5) gegen den Anschlag (4) des Vormontagewerkzeugs die Stirnseite(9) des Rohrende (5) gleichzeitig eine Prägung erhält.

2. Verfahren nach Anspruch 1, **dadurch gekennzeichnet, daß** die Preßkraft für das Einschneiden des oder der Schneidringe (7) in den Rohrmantel zur Durchführung der Vormontage derartig dimensioniert ist, daß noch eine ausreichende Preßkraft zwischen Röhrende (5) und Anschlag (4) für den Prägedruck auf das Rohrende (5) zur Verfügung steht.

3. Verfahren nach Anspruch 1 oder 2, **dadurch gekennzeichnet, daß** zwischen der Preßkraft zwischen Rohrende (15) und Anschlag (4) für den Prägedruck und der Einschneidtiefe der Schneide des Schneidringes (7) ein funktioneller Zusammenhang gegeben ist, derart, daß eine sichtbare Signatur (8,10,11) auf der Stirnseite (9) des Röhrendes (5) ein eindeutiger Nachweis für eine ausreichende Einschneidtiefe ist.

4. Vorrichtung zur Vormontage eines Schneidringe (7) auf einem Rohrende (5), mit einem Stutzen (1), welcher einen inneren Anschlag (4) und eine konische Zuführung (2) auf weist, vorzugsweise einen 24°-Konus, zur Durchführung des Verfahrens nach den Ansprüchen 1 bis 3, **dadurch gekennzeichnet, daß** der kreisringförmige Anschlag (4) des Einschraubstutzens (1) eine erhabene und/oder vertiefte Signatur (8, 10, 11) zur Durchführung einer Druckprägung während des Vormontagevorganges auf die Stirnseite (9) des Rohrendes (5) zur Anzeige einer Vormontagekontrolle aufweist.

5. Vorrichtung nach Anspruch 4, **dadurch gekennzeichnet, daß** die auf den Schneidring (7) ausgeübte Kraft Fp so groß dimensioniert ist, daß gleichzeitig mit dem Einschneidvorgang des Schneidringes (7) oder der Schneidringe in den Mantel des Rohres (5) ein Prägedruck auf die Stirnseite (9) des Rohrendes (5) durchführbar ist.

6. Vorrichtung nach Anspruch 4, **dadurch gekennzeichnet, daß** die Signatur (8, 10, 11) als ein Wort und/oder Bildzeichen für den Nachweis einer vorgeschriebenen und ausreichenden Vormontage ausgebildet ist.

7. Vorrichtung nach Anspruch 4, **dadurch gekennzeichnet, daß** die Signatur (8, 10, 11) einen Code enthält, welcher relevante Daten wie die Zeit oder Materialdaten aufweist.

8. Vorrichtung nach Anspruch 4, **dadurch gekennzeichnet, daß** die Signatur auf einer austauschbaren Scheibe, einer Ringscheibe oder einem Zylinder angeordnet ist, welche vor der Vormontage dem Anschlag (4) vorsetzbar sind.

9. Vorrichtung nach Anspruch 4 oder 8, **dadurch gekennzeichnet, daß** der Anschlag (4) oder die dem Werkstück zugekehrte Stirnseite der Scheiben- oder Zylinderfläche ein hartes granulat- oder pulverförmiges Material in Form des aufzudruckenden Codes aufweist, welches fest aufgetragen ist.

## Claims

1. Process for marking a tube or tube end (5) to indicate that a specified assembly sequence has been adhered to and as an indication of an assembly check and thus a quality function, where at least one cutting ring (7) with at least one cutting edge is premounted on the tube end (5), the tube end (5) provided with the cutting ring (7) is inserted into a premounting tool provided with a tapering part (2) and a stop (4) as far as this stop (4) and an axial force is applied to the cutting ring (7), **characterised in that** the tube end (5) is pressed onto the stop (4) of the premounting tool provided with a mark (8,10,11), while the cutting ring (7) cuts into the tube wall under the pressure applied to it, by which operation a mark is at the same time stamped onto the end face (9) of the tube end (5) through the pressure of the tube end (5) against the stop (4) of the premounting tool.

2. Process in accordance with claim 1, **characterised in that** the pressure for the cutting ring or rings (7) to cut into the tube wall for carrying out the premounting operation is calculated so that there is sufficient pressure available between the tube end (5) and the stop (4) to apply the stamp to the tube end (5).

3. Process in accordance with claim 1 or 2, **characterised in that** there is a functional connection between the pressure between the tube end (5) and the stop (4) for applying the stamp and the cutting depth of the cutting edge of the cutting ring (7) such that a visible mark (8, 10, 11) on the end face (9) of the tube end (5) is an unmistakable indication of an adequate cutting depth.

4. Device for premounting a cutting ring (7) on a tube end (5) with a socket (1) which incorporates an inner stop (4) and a tapering guide member (2), preferably a 24° taper, for carrying out the process in accordance with claims 1 to 3, **characterised in that** the annular stop (4) of the screw-in socket (1) bears a raised and/or sunk mark (8,10.11) for applying a stamp during the premounting operation to the end face (9) of the tube end (5) to indicate that a premounting check has been carried out.

5. Device in accordance with claim 4, **characterised in that** the pressure Fp applied to the cutting ring (7) is so calculated that, as the cutting ring (7) or rings cut into the wall of the tube (5), a stamp is applied to the end face (9) of the tube end (5).

6. Device in accordance with claim 4, **characterised in that** the mark (8, 10, 11 ) is constructed in the form of a word and/or graphic symbol to indicate specified and adequate premounting.

7. Device in accordance with claim 4, **characterised in that** the mark (8, 10, 11) contains a code which includes relevant data such as the time or material data.

8. Device in accordance with claim 4, **characterised in that** the mark is arranged on an exchangeable disk, an annular disk or a cylinder which can be placed in front of the stop (4) before premounting.

9. Device in accordance with claim 4 or 8, **characterised in that** the stop (4) or the end face of the disk or cylinder surface facing the workpiece incorporates hard granulated or powdery material fixed to it in the form of the code to be applied.

## Revendications

1. Procédé de marquage d'un tube ou d'une extrémité de tube (5) en vue de la caractérisation d'un procédé de montage prescrit et respecté et de la justification d'un contrôle de montage et donc de la fonction de qualité, au moins une bague coupante (7) comportant au moins une lame étant montée d'avance sur l'extrémité du tube (5), l'extrémité de tube (6) pourvue de la bague coupante (7) étant insérée dans un outil de montage préliminaire, comportant une partie conique (2) et une butée (4), jusqu'à la butée correspondante (4), une force axiale étant exercée sur la bague coupante (7), **caractérisé en ce que** l'extrémité du tube (5) est pressée sur la butée (4) pourvue d'une signature (8, 10, 11) de l'outil de montage préliminaire, la bague coupante (7) entaillant la gaine du tube par suite de la force qui y est exercée, le côté frontal (9) de l'extrémité du tube (5) étant simultanément pourvu d'un estampage par l'intermédiaire de la force de pression de l'extrémité du tube (5) contre la butée (4) de l'outil de montage préliminaire.

2. Procédé selon la revendication 1, **caractérisé en ce que** la force de pression pour l'entaillage de la bague coupante ou des bagues coupantes (7) dans la gaine du tube, en vue de la réalisation du montage préliminaire, est dimensionnée de sorte qu'une force de pression suffisante est disponible entre l'extrémité du tube (5) et la butée (4) pour la pression d'estampage exercée sur l'extrémité du tube (5).

3. Procédé selon les revendications 1 ou 2, **caractérisé en ce qu'**il existe une relation fonctionnelle entre la force de pression entre l'extrémité du tube (5) et la butée (4) pour la pression d'estampage et la profondeur d'entaillage de la lame de la bague coupante (7), de sorte qu'une signature visible (8, 10, 11) sur le côté frontal (9) de l'extrémité du tube (5) constitue une preuve évidente d'une profondeur de coupe suffisante.

4. Dispositif pour le montage préliminaire d'une bague coupante (7) sur une extrémité de tube (5) avec un raccord (1), comportant une butée inteme (4) et une amenée conique (2), de préférence un cône de 24°, en vue de l'exécution du procédé selon les revendications 1 à 3, **caractérisé en ce que** la butée circulaire (4) du raccord de vissage (1) comporte une signature surélevée et/ou évidée (8, 10, 11) en vue de l'exécution d'un estampage au cours du procédé de montage préliminaire sur le côté frontal (9) de l'extrémité du tube (5) pour signaler un contrôle du montage préliminaire.

5. Dispositif selon la revendication 4, **caractérisé en ce que** la force Fp exercée sur la bague coupante (7) est dimensionnée de sorte qu'une pression d'estampage peut être exercée sur le côté frontal (9) de l'extrémité du tube (5) simultanément à l'opération d'entaillage de la bague coupante (7) ou des bagues coupantes dans la gaine du tube (5).

6. Dispositif selon la revendication 4, **caractérisé en ce que** la signature (8, 10, 11) a la forme d'un mot et/ou d'un symbole en vue de servir de preuve d'un montage préliminaire prescrit et suffisant.

7. Dispositif selon la revendication 4, **caractérisé en ce que** la signature (8,10,11) contient un code, comportant des données importantes comme le temps ou les caractéristiques de matériau.

8. Dispositif selon la revendication 4, **caractérisé en ce que** la signature est agencée sur un disque à remplacement, un disque annulaire ou un cylindre, pouvant être agencés avant le montage préliminaire devant la butée (4).

9. Dispositif selon les revendications 4 ou 8, **caractérisé en ce que** la butée (4) ou le côté frontal de la surface du disque ou du cylindre orienté vers la pièce d'oeuvre comporte un matériau dur sous forme de granules ou de poudre constituant le code devant être imprimé, celui-ci étant appliqué de manière ferme.
